# EUROPÄISCHE PATENTSCHRIFT

(11) **EP 2 906 917 B1**
(45) Veröffentlichungstag und Bekanntmachung des Hinweises auf die Patenterteilung: **06.12.2023**
(21) Anmeldenummer: 13776800.8
(22) Anmeldetag: 14.10.2013
(51) Int. Cl.: G01J 1/42, G01J 4/04, G01S 17/02, G01J 9/00, G01S 7/48, G01S 7/499, G01J 1/04, G01J 9/02, G01N 21/21, H01S 3/00

(54) **EINRICHTUNG UND VERFAHREN ZUR ERKENNUNG VON LASERSTRAHLUNG**
DEVICE AND METHOD FOR DETECTING LASER RADIATION
DISPOSITIF ET PROCÉDÉ DE DÉTECTION DE RAYONNEMENT LASER

(30) Priorität: 12.10.2012 DE 102012218618; 20.11.2012 DE 102012221164
(43) Veröffentlichungstag der Anmeldung: 19.08.2015
(73) Patentinhaber: Fraunhofer-Gesellschaft zur Förderung der angewandten Forschung e.V., 80686 München (DE)
(72) Erfinder: ANSTETT, Gregor, 76676 Graben-Neudorf (DE); EBERT, Reinhard, 72411 Bodelshausen, (DE)
(74) Vertreter: Friese Goeden Patentanwälte PartGmbB
(86) Internationale Anmeldenummer: PCT/EP2013/071419
(87) Internationale Veröffentlichungsnummer: WO 2014/057136

(56) Entgegenhaltungen:
- EP-A2- 0 930 485
- EP-A2- 2 287 591
- CA-A1- 1 175 682
- DD-A1- 120 294
- DE-A1- 3 326 868
- DE-A1- 19 851 010
- DE-U1- 20 208 810
- US-A- 4 492 434
- US-A- 4 668 860
- US-A- 5 206 502
- US-A- 5 771 092

## Beschreibung

Die Erfindung betrifft eine Einrichtung zur Erkennung von Laserstrahlung mit zumindest einem Lichteintritt und zumindest einem photoelektrischen Wandler, welcher dazu eingerichtet ist, durch den Lichteintritt eintreffende elektromagnetische Strahlung in ein elektrisches Signal zu wandeln. Weiterhin betrifft die Erfindung ein Verfahren zur Erkennung von Laserstrahlung, bei welchem elektromagnetische Strahlung einem photoelektrischen Wandler zugeführt und dort in ein elektrisches Signal gewandelt wird. Vorrichtungen und Verfahren der eingangs genannten Art können dazu eingesetzt werden, die Anwesenheit von Laserstrahlung zu erkennen und vor Laserstrahlung zu warnen oder zu schützen.

Aus der DE 14 97 569 ist bekannt, auf ein Periskop eintreffende Laserstrahlung an einer selektiv reflektierenden Schicht auszublenden und dem Benutzer des Periskopes über eine Warnlampe anzuzeigen, dass das Periskop auf eine Lichtquelle mit augenschädlicher Strahlung ausgerichtet ist.

Diese bekannte Vorrichtung weist jedoch den Nachteil auf, dass nur direkt eintreffende Laserstrahlung nachgewiesen werden kann. Die selektive Filterung erfordert darüber hinaus die Kenntnis der eintreffenden Wellenlänge. Die Vorrichtung kann daher nicht vor einer Vielzahl unterschiedlicher Laserlichtquellen schützen, da ein breitbandiger Schutzfilter große Teile des sichtbaren Lichtes aus dem Strahlengang entfernen würde, sodass der Seheindruck des Benutzers nachhaltig gestört wäre. Weiterhin ist die bekannte Vorrichtung in ein Periskop eingebaut, so dass der Benutzer Schutzlos ist, wenn er nicht durch das Periskop blickt. Jedoch kann Laserstrahlung auch dann zu Augenschäden führen, wenn diese die Augen eines Benutzers direkt trifft. Weiterer Stand der Technik ist aus der DE 198 51 010 A1 bekannt.

Der vorliegenden Erfindung liegt somit die Aufgabe zugrunde, eine Vorrichtung und ein Verfahren zur Detektion von Laserstrahlung und zur Ausgabe eines Warnsignals anzugeben, welche Strahlung aus unterschiedlichen Laserstrahlquellen nachweisen kann und welche unabhängig von optischen Instrumenten einsetzbar ist.

Die Aufgabe wird erfindungsgemäß durch eine Einrichtung gemäß Anspruch 1 und durch ein Verfahren gemäß Anspruch 5 gelöst. Erfindungsgemäß wird vorgeschlagen, mit der Einrichtung zur Erkennung von Laserstrahlung aus einem größeren Raumwinkel eintreffendes Licht auf die Anwesenheit von kohärenter, monochromatischer oder polarisierter Laserstrahlung zu überwachen. Die Laserstrahlung kann dabei direkt aus der Strahlquelle in die vorgeschlagene Einrichtung eintreffen. Es gehört jedoch zu den Vorzügen der Erfindung, dass auch an Oberflächen gespiegelte oder gestreute Laserstrahlung nachgewiesen werden kann, obgleich deren Intensität im Vergleich zur Umgebungshelligkeit nur gering sein kann. Die vorgeschlagene Einrichtung und das vorgeschlagene Messverfahren weisen somit eine im Vergleich zum Stand der Technik verbesserte Sensitivität auf und ermöglichen somit den Nachweis auch bei schlechtem Signal/Untergrund-Verhältnis.

Die vorgeschlagene Einrichtung zur Erkennung von Laserstrahlung weist zumindest einen Lichteintritt auf. Durch den Lichteintritt wird der Vorrichtung elektromagnetische Strahlung zugeführt. Hierzu kann der Lichteintritt in Form einer Gehäuseöffnung ausgestaltet sein. In anderen Ausführungsformen der Erfindung kann der Lichteintritt ein optisches Element wie beispielsweise eine Linse oder einen Spiegel oder eine Faseroptik oder eine Kombination aus einer Mehrzahl von Linsen und/oder Spiegeln und/oder optischen Fasern aufweisen. Hierdurch kann der Akzeptanzbereich an einen vorgebbaren Einsatzzweck angepasst werden. Beispielsweise kann der Erfassungswinkel der Vorrichtung in einigen Ausführungsformen der Erfindung zwischen etwa 10° und etwa 160° oder zwischen etwa 1° und etwa 40° eingestellt werden.

Wenn im Zusammenhang mit der vorliegenden Beschreibung von Licht bzw. elektromagnetischer Strahlung gesprochen wird, so wird darunter Strahlung aus einem Wellenlängenbereich verstanden, welcher von bekannten Laserstrahlquellen abgedeckt wird bzw. erreichbar ist. In einigen Ausführungsformen der Erfindung kann dies ein Wellenlängenbereich von etwa 10,6 µm bis etwa 125 nm sein. In anderen Ausführungsformen der Erfindung kann sich der Wellenlängenbereich von 1,4 µm bis 0,4 µm erstrecken. Dieser Wellenlängenbereich wird vom Auge auf die Retina fokussiert, sodass dort irreversible Schäden auftreten können. In wiederum einer anderen Ausführungsformen der Erfindung kann sich der Wellenlängenbereich von 2,5 µm bis 0,7 µm erstrecken.

Die elektromagnetische Strahlung, welche über den Lichteintritt in die Einrichtung eingetreten ist, wird in einem photoelektrischen Wandler in ein elektrisches Signal gewandelt. Als photoelektrischer Wandler kann beispielsweise eine pn-Diode oder eine pin-Diode eingesetzt werden. In anderen Ausführungsformen der Erfindung kann der photoelektrische Wandler einen Phototransistor oder einen Photowiderstand enthalten oder daraus bestehen. Der photoelektrische Wandler kann als Halbleiterbauelement ausgeführt sein und beispielsweise Germanium, Silizium, Galliumarsenid und/oder zumindest ein Gruppe-3-Nitrid enthalten. Die Erfindung lehrt nicht die Verwendung eines speziellen photoelektrischen Wandlers für die Zwecke der vorliegenden Erfindung. Wesentlich ist, dass der photoelektrische Wandler eine Eintrittsfläche für elektromagnetische Strahlung aufweist, die Strahlung im photoelektrischen Wandler absorbiert wird und an den Ausgangskontakten des photoelektrischen Wandlers als elektrisches Strom- oder Spannungssignal nachweisbar ist.

Zwischen dem Lichteintritt und dem photoelektrischen Wandler ist zumindest ein Modulator angeordnet. Der Modulator ist so ausgebildet, dass dieser Laserstrahlung mit einer Modulationsfrequenz moduliert. Dies bedeutet, dass bei Anwesenheit von Laserstrahlung die am photoelektrischen Wandler eintreffende Intensität mit einer Modulationsfrequenz zu- oder abnimmt. Die Modulationsfrequenz des Laserlichtes kann von der Ansteuerfrequenz des Modulators und der Wellenlänge der Laserstrahlung abhängen. Hintergrundstrahlung, welche nicht von Laserstrahlquellen erzeugt wird, wird hingegen vom Modulator nicht moduliert, sodass diese mit konstanter Intensität oder mit einer vom Modulator unabhängigen Modulationsfrequenz auf den photoelektrischen Wandler auftrifft. Eine nachfolgende Signalauswertung des im photoelektrischen Wandler erzeugten elektrischen Signals kann auf Signalanteile mit der Modulationsfrequenz untersucht werden. Sofern ein solcher Signalanteil vorhanden ist bzw. größer als eine vorgebbare Schwelle ist, ist die Anwesenheit von Laserstrahlung nachgewiesen oder zumindest wahrscheinlich. Wenn das elektrische Signal keine Signalanteile mit der Modulationsfrequenz enthält, kann daraus geschlossen werden, dass keine Laserstrahlung bzw. nur Laserstrahlung mit einer Intensität unterhalb der Nachweisgrenze durch den Lichteintritt in die Vorrichtung eintritt. Durch die selektive Modulation von Laserstrahlung kann somit die Sensitivität der Vorrichtung soweit verbessert werden, dass die geringe Intensität von gespiegelter bzw. gestreuter Laserstrahlung zum Nachweis der Anwesenheit dieser Strahlung ausreicht. Selbstverständlich kann auch direkt in den Lichteintritt einfallende Laserstrahlung weiterhin nachgewiesen werden. Diese hohe Intensität ist jedoch zum Nachweis nicht zwingend erforderlich.

Erfindungsgemäß weist die Auswerteschaltung zur Bestimmung des modulierten Signalanteils einen Lock-in-Verstärker und/oder einen Frequenzanalysator und/oder einen Box-Car-Integrator und/oder eine Einrichtung zur Durchführung eines Korrelationsverfahrens auf. In einigen Ausführungsformen der Erfindung kann dies eine Einrichtung zur Durchführung einer Autokorrelation sein.

Ein Box-Car-Integrator ist dazu eingerichtet, das Signal des photoelektrischen Wandlers in einer Kreuzkorrelation mit einer periodischen Deltaimpulsfolge mit der Modulationsfrequenz zu vergleichen. Das Ergebnis dieser Kreuzkorrelation ist bis auf einen Amplitudenfaktor das durch die Laserstrahlung erzeugte Signal. Die Kreuzkorrelation bewirkt die Transformation des gesuchten Signals vom Realzeitbereich in einen durch die Zeitverschiebung zwischen Signal und Deltaimpulsfolge gegebenen Verzögerungszeitbereich. Ist das Signal von Rauschen überlagert, beispielsweise durch Hintergrundstrahlung von inkohärenten natürlichen oder künstlichen Lichtquellen, so wird dieses Rauschen durch die zeitliche Mittelwertbildung unterdrückt. Hierzu kann ein Tiefpassfilter vorhanden sein, dessen Grenzfrequenz so gewählt ist, dass das transformierte Signal den Tiefpass ungehindert passieren kann.

Ein Lock-in-Verstärker stellt einen sehr schmalbandigen Bandpassfilter dar und verbessert somit das Signal/RauschVerhältnis, da Signalanteile, welche nicht mit der Modulationsfrequenz variieren, gefiltert werden. Dies betrifft somit vorliegend wiederum die Hintergrundstrahlung anderer Strahlungsquellen, welche entweder im Dauerstrichbetrieb Licht emittieren oder mit einer anderen und unkorrelierten Frequenz, beispielsweise mit 50 Hz oder 100 Hz, wenn die Lichtquelle vom öffentlichen Stromnetz gespeist wird.

Ein Frequenzanalysator kann ebenfalls dazu verwendet werden, die Signalintensität bei einer vorgebbaren Frequenz zu erfassen, indem die Signalanteile bei unterschiedlichen Frequenzen analysiert werden.

In nicht beanspruchten Ausführungsformen der Erfindung kann der Modulator zumindest einen Polarisationsfilter enthalten, dessen Polarisationsrichtung zeitlich veränderbar ist. Viele bekannte Lasertypen, insbesondere leicht transportable Halbleiterlaser, senden polarisiertes Licht aus. Demgegenüber sind die meisten Strahlungsquellen der Hintergrundstrahlung unpolarisiert, beispielsweise Glühlampen, Leuchtstoffröhren, Gasentladungslampen oder Sonnenlicht. Aus der Anwesenheit von polarisiertem Licht kann daher auf möglicherweise schädigende Laserstrahlung geschlossen werden. Sofern der Modulator einen Polarisationsfilter enthält, dessen Polarisationsrichtung zeitlich veränderbar ist, wird unpolarisiertes Licht mit zeitlich konstanter Intensität auf den photoelektrischen Wandler auftreffen. Wenn polarisierte Strahlung auf den Polarisationsfilter trifft, wird sich die Intensität zyklisch mit der Modulationsfrequenz von einem Maximalwert zu einem Minimalwert verändern. In einigen nicht beanspruchten Ausführungsformen der Erfindung kann der Modulator darüber hinaus ein λ/4-Plättchen enthalten, um zirkular polarisiertes Licht in linear polarisiertes Licht zu wandeln. Dies ermöglicht auch den Nachweis zirkular polarisierter Laserstrahlung.

In einigen nicht beanspruchten Ausführungsformen der Erfindung kann der Polarisationsfilter einen rotierenden Polarisator enthalten. Der Polarisator kann in an sich bekannter Weise eine Polarisationsfolie enthalten, welche auf einem Glasträger aufgebracht sein kann. Der zumindest eine Polarisator kann in einer rotierbaren Halterung angeordnet sein, welche beispielsweise durch einen Elektromotor in Rotation versetzt werden kann. Aus der bekannten Rotationsfrequenz des Polarisationsfilters ergibt sich die Modulationsfrequenz eintreffender Laserstrahlung.

In einigen nicht beanspruchten Ausführungsformen der Erfindung kann der Polarisationsfilter einen Flüssigkristallpolarisator aufweisen. Ein solcher Flüssigkristallpolarisator wird auch als optischer Schalter bei an sich bekannten LC-Displays eingesetzt und kann durch ein elektrisches Signal angesteuert werden. Somit kann eintreffende Laserstrahlung mit der Frequenz und Signalform eines elektrischen Modulationssignals moduliert werden.

In einigen nicht beanspruchten Ausführungsformen der Erfindung kann der Polarisationsfilter eine Pockels-Zelle und/oder eine Kerr-Zelle und/oder einen akusto-optischen Modulator enthalten. Auch diese Ausführungsformen der Erfindung erlauben einerseits einen robusten und kompakten Aufbau ohne mechanische Teile und die einfache Ansteuerbarkeit durch ein elektrisches Signal, welches gleichzeitig als Referenzsignal bzw. Frequenzstandard für die Auswerteschaltung verwendet werden kann.

In einigen nicht beanspruchten Ausführungsformen der Erfindung kann der Modulator zumindest einen spektral abstimmbaren Bandpassfilter enthalten. In einigen Ausführungsformen der Erfindung kann der Bandpassfilter zumindest einen Prismenmonochromator enthalten. In anderen nicht beanspruchten Ausführungsformen der Erfindung kann der Bandpassfilter zumindest einen Gittermonochromator enthalten. In wiederum einer anderen nicht beanspruchten Ausführungsform der Erfindung kann der Bandpassfilter zumindest einen dielektrischen Filter enthalten. Der spektral abstimmbare Bandpassfilter kann einen vorgebbaren Wellenlängenbereich zyklisch mit der Modulationsfrequenz durchfahren, sodass zyklisch Licht einer vorgebbaren Wellenlänge bzw. eines vorgebbaren Wellenlängenbereichs, welcher vom spektralen Auflösungsvermögen des Bandpassfilters definiert ist, auf den photoelektrischen Wandler fällt. Natürliche oder künstliche Strahlungsquellen weisen oftmals mehrere Wellenlängen auf, um eine weiße Lichtfarbe und einen farbrichtigen Seheindruck beim Betrachter hervorzurufen. Im Gegensatz dazu, ist Laserstrahlung in der Regel monochromatisch, d. h. die Laserstrahlung weist nur einen scharf begrenzten Wellenlängenbereich auf. Wird somit ein größerer Wellenlängenbereich zyklisch mit der Modulationsfrequenz analysiert, so verrät sich die Anwesenheit von Laserstrahlung durch einen zyklischen Intensitätsanstieg.

In einigen Ausführungsformen der Erfindung kann der Modulator zumindest einen Schirm aufweisen, von welchem eintreffende elektromagnetische Strahlung zumindest teilweise reflektierbar ist, wobei der Schirm relativ zum photoelektrischen Konverter bewegbar ist. Diese Ausführungsform der Erfindung macht sich zunutze, dass an einem Schirm mit stochastischer Oberfläche stochastische Reflexionen auftreten. Das reflektierte Licht führt zu einem homogenen, d. h. zeitlich konstantem Signal im photoelektrischen Wandler, sofern der Einrichtung keine Laserstrahlung zugeführt wird. Eintreffende Laserstrahlung führt hingegen zu Speckle-Interferenzen, welche als Intensitätsanstieg nachgewiesen werden können. Durch die relative Bewegung zwischen Schirm und photoelektrischem Konverter wird das Interferenzmuster zyklisch über den Konverter bewegt.

In einigen Ausführungsformen der Erfindung kann der Modulator zumindest ein Interferometer mit zumindest folgenden Teilen enthalten: zumindest einen ersten optischen Pfad mit einer ersten optischen Weglänge, zumindest einen zweiten optischen Pfad mit einer zweiten optischen Weglänge, zumindest einen Strahlteiler mit zumindest einem Eingang und zumindest zwei Ausgängen, wobei bei Betrieb der Einrichtung eintreffende elektromagnetische Strahlung auf den Strahlteiler fällt und der Strahlteiler das Licht anteilig auf den ersten und den zweiten optischen Pfad aufteilt, wobei das Licht der beiden optischen Pfade vor dem Nachweis im photoelektrischen Konverter zur Interferenz gebracht wird und zumindest eine optische Weglänge zeitlich veränderlich ist. Kohärente Laserstrahlung wird somit zu einem Interferenzmuster führen, welches aufgrund der veränderlichen optischen Weglänge zeitlich variiert. Inkohärente Strahlung führt hingegen zu einem Gleichspannungssignal im photoelektrischen Wandler, sodass die beschriebene Auswertung des elektrischen Signals erfolgen kann.

In einigen Ausführungsformen der Erfindung kann die vorgeschlagene Vorrichtung dazu eingerichtet sein, die an einer Oberfläche reflektierte oder gestreute elektromagnetische Strahlung zu analysieren und bei der Erkennung von Laserlicht einen Alarm auszulösen oder Schutzmaßnahmen zu ergreifen. Die Oberfläche, an welcher die Strahlung reflektiert bzw. gestreut wird, kann beispielsweise Teil des Innenraumes eines Fahr- oder Flugzeuges sein. Auf diese Weise kann die erfindungsgemäße Vorrichtung in einfacher Weise den gesamten Innenraum eines Fahr- oder Flugzeuges auf eindringende Laserstrahlung überwachen. In anderen Ausführungsformen der Erfindung kann die Oberfläche die Außenhülle bzw. eine Teilfläche der Außenhülle eines Flugzeuges sein, sodass die erfindungsgemäße Vorrichtung dazu eingesetzt werden kann, den Luftraum über einem Flughafen zu überwachen und anfliegende Flugzeuge vor der Bestrahlung mit schädlicher Laserstrahlung zu warnen. Hierzu kann die erfindungsgemäße Vorrichtung am Boden angeordnet sein und den gesamten anfliegenden Luftverkehr überwachen oder die Vorrichtung ist am oder im Flugzeug angebracht und erfasst zumindest eine Teilfläche der Außenhülle. In wiederum einer anderen Ausführungsform der Erfindung kann die streuende Oberfläche Teil einer Produktionshalle sein, in welcher Laser zur Materialbearbeitung oder für Messeinrichtungen eingesetzt werden. In diesem Fall kann die Vorrichtung den Betrieb der Laser anzeigen oder, sofern die Laser durch Schutzmaßnahmen gesondert vom Rest der Produktionshalle abgeschirmt sind, Defekte in diesen Schutzmaßnahmen nachweisen. In wiederum einer anderen Ausführungsform der Erfindung kann die erfindungsgemäße Vorrichtung ein Freigelände überwachen, beispielsweise ein Stadion, einen Veranstaltungsort oder ein Feldlager. Auf diese Weise können militärische Angriffe mit Laserwaffen erkannt werden oder Blendversuche einzelner Besucher der Veranstaltung mit frei verkäuflichen Laserpointern lassen sich frühzeitig erkennen.

In wiederum einer anderen Ausführungsform der Erfindung kann die erfindungsgemäße Vorrichtung die Innen- oder Außenwände eines Gebäudes überwachen, um so das Eintreffen von Laserstrahlung zu erkennen, z.B. aus Laser basierten Messsystemen.

Nachfolgend soll die Erfindung anhand von Figuren ohne Beschränkung des allgemeinen Erfindungsgedankens näher beschrieben werden. Dabei zeigt:
- Figur 1: das Funktionsprinzip der erfindungsgemäßen Vorrichtung.
- Figur 2: zeigt ein Blockschaltbild der erfindungsgemäßen Vorrichtung.
- Figur 3: zeigt ein Ausführungsbeispiel der Erfindung zur Überwachung eines Flughafens.
- Figur 4: zeigt die Integration der erfindungsgemäßen Vorrichtung in ein Flugzeug.
- Figur 5: zeigt ein erstes Ausführungsbeispiel eines Modulators.
- Figur 6: zeigt ein zweites Ausführungsbeispiel eines Modulators.
- Figur 7: zeigt ein drittes Ausführungsbeispiel eines Modulators.

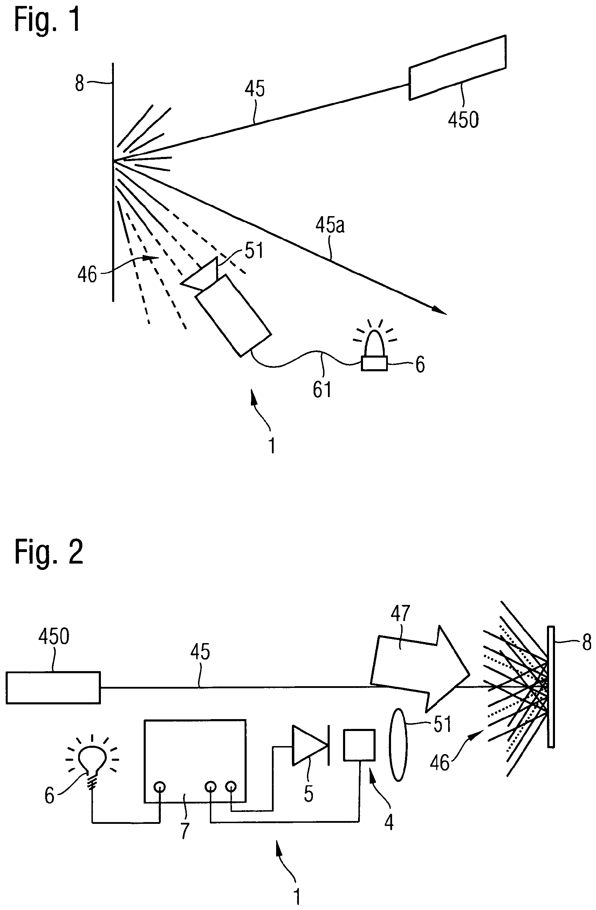

Figur 1 zeigt das Funktionsprinzip der vorliegenden Erfindung. Ein Laserstrahl 45 wird mit einer Laserlichtquelle 450 erzeugt. Die Laserlichtquelle 450 kann beispielsweise ein Laserpointer oder ein anderer tragbarer Laser mit einer Ausgangsleistung zwischen 1 mW und 2 W sein. Solche Laser können von jedermann leicht beschafft werden, beispielsweise über Online-Versandhändler. Bereits die sehr schwachen Laserpointer für Präsentationszwecke sind geeignet, Irritationen und Blendung bei einer angeleuchteten Person hervorzurufen. Ein potenzieller Angreifer kann aus sicherer Distanz agieren, hinterlässt keine Spuren und ist folglich nur schwer zu fassen. Auch fehlt in der Bevölkerung zurzeit noch das Bewusstsein über die Gefährlichkeit und Auswirkungen einer solchen Tat. Hierdurch sinkt die Hemmschwelle für einen mutwilligen Missbrauch und dieser ist daher kaum zu unterbinden.

Die Wellenlänge der Laserstrahlung 45 hängt davon ab, von welchem Typ die Laserlichtquelle 450 ist. Beispielsweise kann die Wellenlänge im infraroten, roten oder grünen Spektralbereich liegen. Die Laserlichtquelle 450 kann von einem Angreifer dazu verwendet werden, Fahrzeugführer, Piloten, Sportler oder Einsatzkräfte wie Polizisten oder Feuerwehrleute zu blenden.

In anderen Ausführungsformen der Erfindung kann die Laserlichtquelle 450 Teil einer Werkzeugmaschine sein, welche beispielsweise zum Laserschneiden oder Laserschweißen von Werkstücken eingesetzt wird. In einigen Ausführungsformen der Erfindung kann die Laserlichtquelle 450 Teil einer laserbasierten Entfernungs- und/oder Schwingungsmessung sein. In einigen Ausführungsformen kann die Laserlichtquelle 450 mit weiteren Bestandteilen einer Maschine in einem Gehäuse eingebaut sein, welches Personen in der Umgebung der Werkzeugmaschine vor der Einwirkung der Laserstrahlung 45 schützt. Sofern das Gehäuse oder dessen Dichtungen defekt sind, kann jedoch gefährliche Laserstrahlung in die Umgebung austreten.

Die erfindungsgemäße Einrichtung 1 soll dazu eingesetzt werden, Personen im Gefahrenbereich der Laserlichtquelle 450 vor der Anwesenheit der Laserstrahlung 45 zu warnen, so dass Schutzmaßnahmen ergriffen werden können. Erfindungsgemäß steuert die Einrichtung 1 eine Alarmeinrichtung 6 an, welche einen optischen und/oder einen akustischen Alarm aussendet, wenn Laserstrahlung detektiert wird; oder die Einrichtung steuert schaltbare Schutzeinrichtungen an. Beispielsweise kann ein schaltbarer Augenschutz von einer ersten, transmittierenden Stellung in eine zweite, absorbierende oder reflektierende Stellung geschaltet werden. Die Alarmeinrichtung 6 bzw. die persönliche Schutzausrüstung ist über eine Datenverbindung 61 mit der Einrichtung 1 zur Erkennung von Laserstrahlung verbunden. Die Datenverbindung 61 kann eine Kabelverbindung oder eine oder eine drahtlose Datenübertragungseinrichtung sein. Eine drahtlose Datenübertragungseinrichtung kann über ein Infrarotsignal oder ein Funksignal Daten übertragen.

Obgleich in Figur 1 und Figur 2 die Alarmeinrichtung 6 jeweils als optisch wahrnehmbarer Alarm dargestellt ist, kann die Alarmeinrichtung 6 selbstverständlich in an sich bekannter Weise auch einen akustischen Alarm und/oder einen taktil wahrnehmbaren Alarm ausgeben.

Unabhängig davon, ob die Laserstrahlung 45 ungewollt austritt, beispielsweise aus einer Werkzeugmaschine mit defekter Abschirmung oder ob die Laserstrahlung 45 in schädigender Absicht auf eine Person oder ein technisches Gerät gerichtet wird, trifft die Laserstrahlung 45 zunächst auf einer Oberfläche 8 auf. Die Oberfläche 8 kann die Kleidung oder die Haut einer Person sein, eine Wand eines Gebäudes, eine Möbeloberfläche, Teile der Innenverkleidung eines Fahr- oder Flugzeuges oder die Außenhaut eines Fahr- oder Flugzeuges. Der Laserstrahl 45 wird an der Oberfläche 8 reflektiert, sodass ein reflektierter Strahl 45a von der Oberfläche ausgeht. Da die Oberfläche eine Rauheit aufweist, wird Licht auch an der Oberfläche 8 diffus gestreut und als Streulicht 46 in den an die Oberfläche 8 angrenzenden Halbraum zurückgeworfen.

Ein Teil des Streulichtes 46, welcher im Akzeptanzbereich des Lichteintritts 51 liegt, kann in die Vorrichtung 1 eintreten. Ebenso tritt inkohärentes Umgebungslicht in die Vorrichtung 1 ein, beispielsweise natürliches Sonnenlicht oder künstliche Lichtquellen einer Straßenbeleuchtung oder einer Allgemeinbeleuchtung. In Abhängigkeit des Abstandes der Vorrichtung 1 von der Oberfläche 8 und der Leistung der Laserstrahlung 45 kann das den Untergrund bildende inkohärente Umgebungslicht eine erheblich höhere Intensität aufweisen als das gestreute Laserlicht 46. Die erfindungsgemäße Vorrichtung 1 kann trotz dieses schlechten Signal/Untergrund-Verhältnisses die Laserstrahlung 45 anhand des gestreuten Laserlichtes 46 erkennen.

Die Funktionsweise der erfindungsgemäßen Vorrichtung wird anhand von Figur 2 näher erläutert. Auch Figur 2 zeigt eine Laserlichtquelle 450, deren Laserstrahlung 45 auf eine Oberfläche 8 auftrifft. In gleicher Weise trifft Sonnenlicht 47 auf die Oberfläche 8 auf. Gestreute Laserstrahlung 46 wird unter anderem in Richtung des Lichteintrittes 51 zurückgeworfen. Dem gestreuten Laserlicht 46 überlagert ist reflektiertes und gestreutes Sonnenlicht 47.

Der Lichteintritt 51 kann in einigen Ausführungsformen der Erfindung eine Linse, eine optische Faser oder eine Mehrzahl optischer Elemente aufweisen, um den Akzeptanzwinkel der Einrichtung 1 an einen vorgebbaren Sollwert anzupassen. In anderen Ausführungsformen der Erfindung kann der Lichteintritt 51 als Gehäuseöffnung ausgebildet sein, sodass nur kollimierte Strahlung in die Einrichtung 1 eintreten kann. Sofern der Lichteintritt 51 zumindest ein optisches Element enthält, kann dieses auf der der Oberfläche 8 abgewandten Seite einen Zwischenfokus bzw. eine Zwischenbildebene bilden.

In der Zwischenbildebene oder im parallelen Strahlengang ist ein Modulator 4 angeordnet. Der Modulator 4 ist dazu eingerichtet, die Intensität eintreffenden Lichtes in Abhängigkeit eines elektrischen Signals zu modulieren. Der erfindungsgemäß eingesetzte Modulator 4 wirkt selektiv auf Laserstrahlung, d. h. nur eintreffende Laserstrahlung wird vom Modulator moduliert. Sonnenlicht oder Licht anderer künstlicher Lichtquellen wie Glühlampen, Leuchtstoffröhren oder Gasentladungslampen kann den Modulator 4 unmoduliert verlassen. Die Intensität dieses Lichtes ist somit entweder unmoduliert oder das Licht weist dieselbe Modulation auf, wie bei Eintritt in den Modulator 4.

Das den Modulator 4 verlassende Licht trifft auf einen photoelektrischen Wandler 5. In einigen Ausführungsformen der Erfindung kann zwischen dem Modulator 4 und dem photoelektrischen Wandler 5 eine optionale Linse oder eine Mehrzahl optischer Elemente angeordnet sein, um das Licht auf die Lichteintrittsfläche des photoelektrischen Wandlers zu fokussieren.

Der Modulator ist also nicht wie bei bekannten Verfahren und Vorrichtungen vor der Lichtquelle oder Szene positioniert, sondern direkt vor dem Detektor. Damit durchläuft sowohl das Laserlicht als auch das Hintergrundlicht den Modulator, wobei jedoch das Hintergrundlicht aufgrund der Selektivität des Modulators unmoduliert bleibt. Dies ist der Unterschied zu den bekannten Verfahren, wo z.B. mittels Chopperrad nur die Laserquelle selbst moduliert wird und der auf den Detektor auftreffende Hintergrund stets unmoduliert bleibt, da er den Modulator gar nicht durchläuft. Hieraus folgt, dass kein Zugang zur Laserquelle oder Kenntnisse über deren Eigenschaften vorhanden sein muss. Die Laserquelle könnte sich auch in einigen hundert Metern Entfernung befinden.

Der photoelektrische Wandler 5 weist in einigen Ausführungsformen der Erfindung eine pn-Diode, eine pin-Diode, einen Phototransistor oder einen Photowiderstand auf. Daneben kann der photoelektrische Wandler 5 weitere Bauelemente aufweisen, welche monolithisch auf dem Halbleitersubstrat des photoelektrischen Wandlers integriert sind. Auf diese Weise kann beispielsweise eine Verstärkerschaltung, ein A/D-Wandler, ein Diskriminator oder eine elektrische Energieversorgung im photoelektrischen Wandler integriert sein. Der photoelektrische Wandler 5 wandelt eintreffendes Licht in ein elektrisches Signal. Das elektrische Signal repräsentiert somit das gestreute und modulierte Laserlicht 46 sowie das an der Oberfläche 8 gestreute unmodulierte Umgebungslicht. Das elektrische Signal am Ausgang des photoelektrischen Wandlers 5 wird einer Auswerteschaltung 7 zugeführt.

Die Auswerteschaltung 7 ist dazu eingerichtet, aus dem elektrischen Ausgangssignal des Wandlers 5 Signalanteile zu bestimmen, welche mit der vom Modulator 4 erzeugten Modulationsfrequenz variieren. Diese Signalanteile repräsentieren die Anwesenheit von gestreuter Laserstrahlung 46 und damit die Anwesenheit von Laserstrahlung 45 bzw. den Betrieb der Laserlichtquelle 450. Hierzu kann die Auswerteschaltung 7 eine Einrichtung zur Erzeugung eines Modulationssignals aufweisen, sodass das Modulationssignal dem Modulator 4 zugeführt werden kann. Weiterhin kann die Auswerteschaltung 7 eine Diskriminatorschaltung aufweisen, welche beim Überschreiten vorgebbarer Grenzwerte die Alarmeinrichtung 6 auslöst.

Die Auswerteschaltung 7 kann in einigen Ausführungsformen der Erfindung eine Einrichtung zur Durchführung eines Modulationsverfahrens und/oder einen Lock-in-Verstärker und/oder einen Frequenzanalysator und/oder einen Box-Car-Integrator enthalten. Diese Schaltungen sind besonders dazu geeignet, aus dem elektrischen Signal am Ausgang des photoelektrischen Wandlers 5 gerade diejenigen Signalanteile herauszufiltern, welche mit der vom Modulator 4 bewirkten Modulationsfrequenz moduliert sind. Hierzu kann die Auswerteschaltung 7 eine analoge oder digitale Schaltung aufweisen, welche die gewünschten Funktionen bereitstellt. In anderen Ausführungsformen der Erfindung kann die Auswerteschaltung 7 alternativ oder zusätzlich einen Mikroprozessor oder einen Microcontroller aufweisen, auf welchem eine entsprechende Software ausgeführt wird, welche die gewünschten Funktionen bereitstellt. In einigen Ausführungsformen der Erfindung kann die Auswerteschaltung 7 eine Kennfeldsteuerung, ein neuronales Netz oder eine Fuzzy-Logik aufweisen.

Da die erfindungsgemäße Einrichtung 1 dazu geeignet ist, gestreutes Licht Laserlicht 46 trotz dessen geringer Intensität nachzuweisen, kann die Einrichtung 1 schädigende Laserstrahlung 45 bereits zu einem Zeitpunkt nachweisen, zu dem das Ziel noch nicht getroffen ist und eine Schädigung von Gegenständen oder Personen noch nicht eingetreten ist. Weiterhin ist bei ausreichender Empfindlichkeit auch keine direkte Beaufschlagung des Detektors mit dem Laserstrahl erforderlich. Allein die in einen Raum, z.B. einer Fahrerkabine diffus gestreute Laserstrahlung kann ausreichen, um den Alarm auszulösen. Auch hierdurch wird das Detektionsverfahren unabhängig von dem genauen Standort oder Einfallsrichtung der Laserquelle.

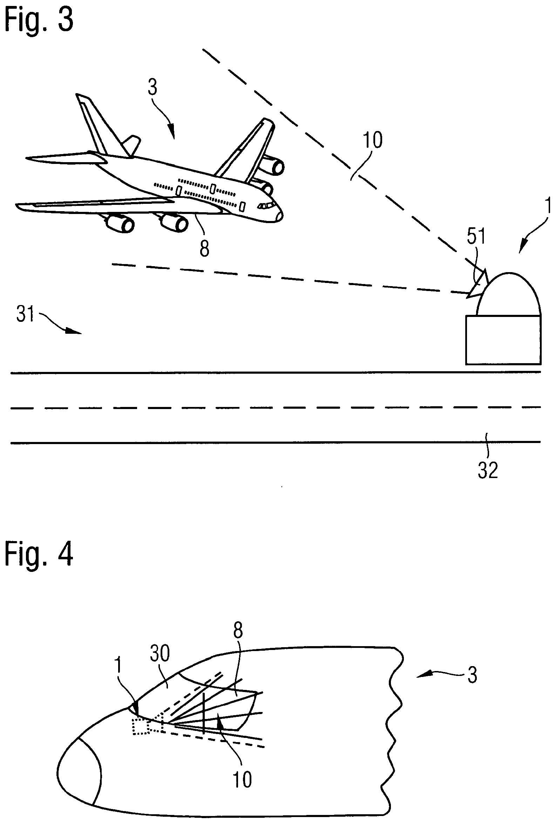

Figur 3 zeigt ein Anwendungsbeispiel der Vorrichtung 1, bei welchem ein Freigelände 31 überwacht wird. Das Freigelände 31 ist im dargestellten Ausführungsbeispiel ein Flughafen mit einer Landebahn 32. Ein einfliegendes Flugzeug 3 stellt an seiner Außenseite eine Oberfläche 8 bereit, welche eintreffende Laserstrahlung reflektiert und diffus streut.

Die Einrichtung 1 mit dem Lichteintritt 51 ist so am Flughafen angeordnet, dass der Akzeptanzbereich 10 des Lichteintrittes 51 das anfliegende Flugzeug 3 zumindest teilweise erfasst. Wird nun das Flugzeug 3 von einem Laserstrahl bestrahlt, beispielsweise aus einem Laservisier, in der Absicht, das Flugzeug 3 unter Beschuss zu nehmen oder von einem handgeführten Laserpointer in der Absicht, die Piloten zu blenden, so wird ein Teil der Laserstrahlung von der Oberfläche 8 diffus zum Lichteintritt 51 gestreut.

In einigen Ausführungsformen der Erfindung kann der Lichteintritt 51 der Einrichtung 1 mit einer variablen Zoomoptik ausgestattet sein, um den Akzeptanzbereich 10 der aktuellen Entfernung des Flugzeuges 3 anpassen zu können. Die Einrichtung 1 kann weiterhin auf einer Schwenk-Neige-Einrichtung montiert sein, um in Verbindung mit einem Trackingsystem, das anfliegende Flugzeug jederzeit im Akzeptanzbereich 10 halten zu können.

Die Vorrichtung 1 kann dann die Laserstrahlung erkennen und einen Alarm auslösen. Der Alarm kann optisch oder akustisch wahrnehmbar sein und über Funk an die Piloten des anfliegenden Flugzeuges 3 übermittelt werden. Somit können diese Schutzmaßnahmen einleiten um eine Schädigung des Flugzeuges 3 oder der Besatzung zu vermeiden. Die erfindungsgemäße Einrichtung 1 weist dabei den Vorteil auf, dass Laserstrahlung bereits dann erkannt werden kann, wenn sie an der metallischen Außenhaut des Flugzeuges 8 reflektiert wird. Hingegen ist es nicht erforderlich, dass die Laserstrahlung bereits den Piloten getroffen oder dessen Augen geschädigt hat. Auch können von einigen wenigen Einrichtungen 1 auf dem Flughafengelände alle einfliegenden Maschinen jeglichen Typs überwacht werden.

Figur 4 zeigt ein weiteres Ausführungsbeispiel der vorliegenden Erfindung. Dargestellt ist ein Teil eines Flugzeugs 3 mit dem Cockpit 30. Im Innenraum des Flugzeuges 3 ist die erfindungsgemäße Vorrichtung 1 angeordnet. Der Akzeptanzbereich 10 erstreckt sich zumindest auf ein Teilvolumen des Cockpits 30. In einigen Ausführungsformen der Erfindung kann das gesamte durch die Verglasung sichtbare Volumen des Cockpits 30 vom Akzeptanzbereich 10 abgedeckt werden.

Neben dem Piloten befindet sich im Cockpit 30 eine Inneneinrichtung bzw. eine Trennwand zur Kabine. Diese Inneneinrichtung weist eine Vielzahl von Oberflächen 8 auf, an welchen eintreffende Laserstrahlung reflektiert und/oder gestreut werden kann. Die an den Oberflächen 8 reflektierte oder gestreute Strahlung wird von der Einrichtung 1 analysiert und bei Vorliegen von Laserstrahlung, welche durch die Verglasung ins Cockpit 30 eintritt, kann eine entsprechende Warnung ausgegeben werden.

Das in Figur 4 dargestellte Funktionsprinzip ist selbstverständlich nicht auf die Anwendung in der Luftfahrt beschränkt. In gleicher Weise kann der Innenraum von Fahrzeugen oder Booten überwacht werden, sodass auch die Führer oder Insassen eines Fahrzeuges oder eines Schiffes vor Angriffen mit Laserstrahlung gewarnt werden können.

In analoger Weise kann das in Figur 4 zur Innenraumüberwachung dargestellte Prinzip auch zur Überwachung der Außenhülle eines Fahr- oder Flugzeuges verwendet werden, indem zumindest ein Sensor zumindest einen Teil der Außenhülle erfasst und reflektierte Strahlung auf die Anwesenheit von Laserstrahlung analysiert.

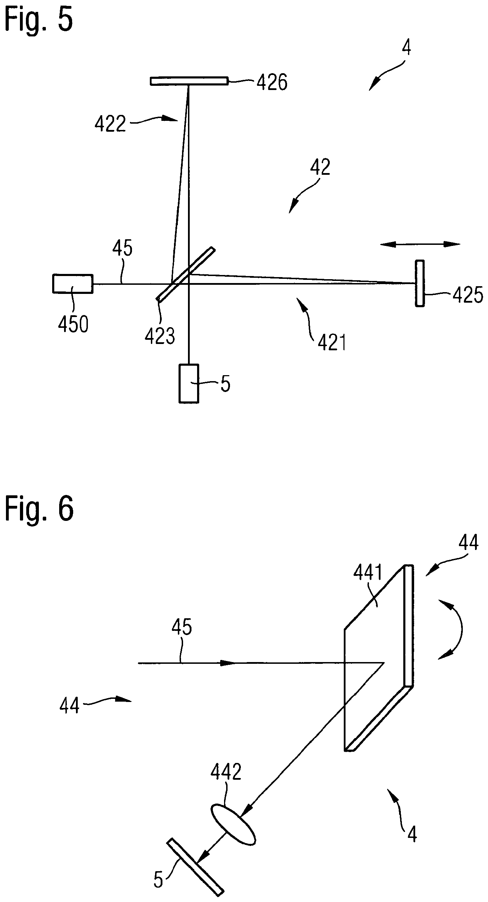

Figur 5 zeigt eine erste Ausführungsform eines Modulators 4. Der Modulator 4 enthält eine Einrichtung 42, welche die zeitliche Kohärenz einfallenden Lichtes erfasst. Der Laserstrahl 45 aus der Laserlichtquelle 450 trifft auf einen Strahlteiler 423. Ein Teil des Laserlichtes wird vom Strahlteiler 423 in den ersten optischen Pfad 421 transmittiert. Ein anderer Teil des einfallenden Lichtes wird vom Strahlteiler 423 in den zweiten optischen Pfad 422 reflektiert. Beide optischen Pfade 421 und 422 sind durch einen zugehörigen Spiegel 426 und 425 begrenzt. Das reflektierte Licht wird zum Strahlteiler 423 zurückgeworfen. Bevor das Licht im photoelektrischen Wandler 5 nachgewiesen wird, interferiert das Licht der beiden optischen Pfade 421 und 422. Durch das Einstellen des Weglängenunterschiedes auf einen vorgebbaren Wert kann eingestellt werden, welche zeitliche Kohärenz eintreffende Strahlung aufweisen muss, um als schädliche Laserstrahlung erkannt zu werden bzw. einen Alarm auszulösen. In einigen Ausführungsformen der Erfindung kann der Weglängenunterschied zwischen etwa 1 cm und etwa 15 cm betragen, um einerseits eine zuverlässige Erkennung zu ermöglichen und andrerseits Fehlalarme zu vermeiden.

Zumindest ein Spiegel, im Ausführungsbeispiel der Spiegel 425, ist beweglich ausgeführt. Dadurch ändert sich die optische Weglänge des optischen Pfades 421 mit der Zeit.

Inkohärentes Umgebungslicht erzeugt kein Interferenzmuster, sodass dieses als Gleichspannung am Ausgang des photoelektrischen Wandlers 5 nachgewiesen werden kann. Sofern Laserstrahlung 45 auf den Modulator 4 auftrifft, erzeugt dieses ein zeitlich veränderliches Interferenzmuster, welches zu einem Wechselspannungssignal am Ausgang des photoelektrischen Wandlers 5 führt. Die Frequenz des Wechselspannungssignals steht in fester Beziehung zur Bewegungsfrequenz des Spiegels 425. Somit können die Anwesenheit und die Intensität eintreffender Laserstrahlung 45 zuverlässig erkannt werden, auch wenn die Intensität im Vergleich zur Umgebungshelligkeit nur gering ist. In anderen Ausführungsformen der Erfindung kann selbstverständlich auch ein anderes Bauteil des Interferometers zur Modulation bewegbar sein, beispielsweise der Strahlteiler oder der Detektor. In wiederum einer anderen Ausführungsform der Erfindung können an zwei Ausgängen des Interferometers zwei photoelektrische Wandler angeordnet sein, welche als symmetrischer optischer Empfänger bzw. "balanced photodetector" eingesetzt werden können.

Figur 5 erläutert beispielhaft die Erfindung anhand eines Michelson-Interferometers. In anderen Ausführungsformen der Erfindung können andere Interferometer verwendet werden, beispielsweise ein Fabry-Perot-Interferometer, ein Mach-Zehnder-Interferometer, ein Twyman-Green-Interferometer, ein Rayleigh-Interferometer, ein Sagnac-Interferometer, ein Fizeau-Interferometer oder ein verkipptes Fest-Etalon, welches periodisch verkippt werden kann.

Eine zweite Ausführungsform des Modulators wird anhand von Figur 6 näher erläutert. Der Modulator 4 entsprechend der zweiten Ausführungsform enthält eine Einrichtung 44 zur Erfassung der räumlichen Kohärenz einfallenden Lichtes. Einfallendes Licht 45 wird von einem Schirm 441 reflektiert. Das einfallende Licht 45 kann in einigen Ausführungsformen der Erfindung von zumindest einem optischen Element fokussiert werden, beispielsweise einer Linse oder einem Spiegel. Das reflektierte Licht wird von zumindest einem optionalen optischen Element 442 auf die Lichteintrittsfläche des photoelektrischen Wandlers 5 fokussiert.

Im Betrieb der Vorrichtung wird eine relative Bewegung zwischen dem Wandler 5 und dem Schirm 441 initiiert, beispielsweise durch Schwenken des Schirms 441 und/oder durch Schwenken oder Verschieben des Wandlers 5, um eine Modulation des Detektorsignals zu bewirken. Zum Bewegen des Schirms 441 kann beispielsweise ein Piezosteller, ein Elektromotor oder ein Magnetsteller verwendet werden. Sofern inkohärentes Umgebungslicht auf den Schirm 441 eintrifft, wird das reflektierte Licht eine konstante Intensität aufweisen. Somit ist das im Wandler 5 erzeugte elektrische Signal auch bei Bewegung des Schirmes 441 konstant. Wenn Laserstrahlung auf den Schirm 441 auftrifft, wird dieses an den stochastisch orientierten Rauheiten der Oberfläche des Schirms 441 reflektiert. Aufgrund des dadurch entstehenden Weglängenunterschiedes entstehen Speckle-Interferenzen im reflektierten Licht. Dies bedeutet, dass der Lichtstrahl Bereiche höherer und Bereiche niedriger Intensität aufweist. Wird dieser Lichtstrahl durch relative Bewegung zwischen Schirm und Wandler periodisch über die Lichteintrittsfläche des Wandlers 5 bewegt, entsteht ein Wechselspannungssignal an dessen Ausgang, welches mit einer Modulationsfrequenz variiert. Der Nachweis eines solchen Wechselspannungsanteils im Ausgangssignal des photoelektrischen Wandlers 5 zeigt somit die Anwesenheit schädigender Laserstrahlung 45 an.

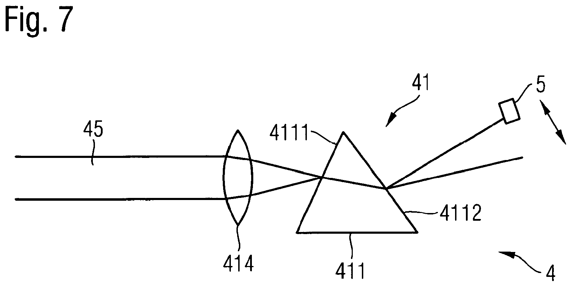

Figur 7 zeigt eine dritte Ausführungsform des Modulators 4. Diese dritte Ausführungsform arbeitet mit einem spektral abstimmbaren Bandpassfilter 41.

Licht 45 wird in ein dispersives Element 411 eingekoppelt. In einigen Ausführungsformen der Erfindung kann das dispersive Element 411 ein Prisma sein. In anderen Ausführungsformen der Erfindung kann der Bandpassfilter einen Gittermonochromator und/oder zumindest einen dielektrischen Filter und/oder einen akusto-optischen Modulator enthalten oder daraus bestehen. Das Einkoppeln des Lichtes 45 in die Eintrittsfläche 4111 des Prismas 411 kann durch ein optionales optisches Element 414, beispielsweise eine Linse, ein Linsensystem oder einen Spiegel, verbessert werden.

Das Licht, welches in das Prisma 411 an der Eintrittsseite 4111 eintritt, wird durch das Prisma 411 transmittiert und verlässt das Prisma über die Austrittsfläche 4112. Aufgrund der Dispersion im Material des Prismas 411 kann Licht unterschiedlicher Wellenlängen an unterschiedlichen Orten nachgewiesen werden. Der photoelektrische Wandler 5 ist dazu eingerichtet, entweder nur einen Teil des austretenden Lichtes nachzuweisen, wobei der photoelektrische Wandler 5 relativ zum Prisma 411 zyklisch bewegt wird, um unterschiedliche Wellenlängen zu unterschiedlichen Zeiten nachzuweisen. In anderen Ausführungsformen der Erfindung kann der photoelektrische Wandler 5 ein Photodiodenarray oder eine Zeilen-CCD-Kamera sein, welche alle Wellenlängen an unterschiedlichen Orten gleichzeitig nachweist, wobei die zyklische Auslese über die Auswerteeinrichtung 7 sichergestellt wird. In jedem Fall wird die zyklische Auslese mit der Modulationsfrequenz variiert.

Streustrahlung wie beispielsweise Sonnenlicht enthält näherungsweise sämtliche sichtbaren Wellenlängen. Daher wird bei der Bewegung des Wandlers 5 näherungsweise eine konstante Intensität nachgewiesen. Monochromatische Laserstrahlung führt zu einem starken Anstieg der Intensität an einem vorgebbaren, von der Wellenlänge abhängigen Ort. Beim zyklischen Bewegen des Wandlers 5 wird dieser Ort zyklisch mit der Modulationsfrequenz durchfahren, sodass sich ein zyklischer Signalanstieg ergibt, welcher aufgrund der festen Phasenbeziehung zur Modulation nachgewiesen werden kann.

Selbstverständlich ist die Erfindung nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Beschreibung oder die Ansprüche ,erste' und 'zweite' Merkmale definieren, so dient dies der Unterscheidung gleichartiger Merkmale ohne eine Rangfolge festzulegen.

## Patentansprüche

1. System mit einer Einrichtung (1) zur Erkennung von Laserstrahlung (45) und mit einer Alarmeinrichtung (6), welche einen optischen, akustischen und/oder taktil wahrnehmbaren Alarm ausgibt, wenn Laserstrahlung detektiert wird, oder einer schaltbaren Schutzeinrichtung, wobei die Alarmeinrichtung (6) oder die schaltbare Schutzeinrichtung über eine Datenverbindung (61) mit der Einrichtung (1) zur Erkennung von Laserstrahlung (45) verbunden ist, wobei die Einrichtung (1) zumindest einem Lichteintritt (51) enthält, welcher dazu eingerichtet ist, elektromagnetische Strahlung (45) eintreten zu lassen, welche an zumindest einer Oberfläche (8) reflektiert oder gestreut wurde und wobei die Einrichtung (1) zumindest einen photoelektrischen Wandler (5) enthält, welcher dazu eingerichtet ist, durch den Lichteintritt (51) eintreffende elektromagnetische Strahlung (46) in ein elektrisches Signal zu wandeln, wobei im Strahlengang zwischen dem Lichteintritt (51) und dem photoelektrischen Wandler (5) ein Modulator (4) angeordnet ist, welcher zumindest eine Einrichtung zur Erfassung der räumlichen oder zeitlichen Kohärenz aufweist und welcher dazu eingerichtet ist, Laserstrahlung mit einer Modulationsfrequenz zu modulieren, so dass die am photoelektrischen Wandler eintreffende Intensität der Laserstrahlung mit der Modulationsfrequenz zu- oder abnimmt, wobei Hintergrundstrahlung mit konstanter Intensität oder einer vom Modulator unabhängigen Modulationsfrequenz auf den photoelektrischen Wandler trifft und die Einrichtung weiterhin eine Auswerteschaltung (7) enthält, mit welcher ein Signalanteil des elektrischen Signals bestimmbar ist, welcher die Modulationsfrequenz aufweist, wobei die Auswerteschaltung (7) einen Lock-In-Verstärker und/oder einen Frequenzanalysator und/oder einen Box-Car Integrator und/oder eine Einrichtung zur Durchführung eines Korrelationsverfahrens enthält.

2. System nach Anspruch 1, **dadurch gekennzeichnet, dass** der Modulator (4) zumindest einen Schirm (441) aufweist, von welchem eintreffende elektromagnetische Strahlung zumindest teilweise reflektierbar ist, wobei der Schirm (411) relativ zum photoelektrischen Konverter (5) bewegbar ist.

3. System nach einem der Ansprüche 1 bis 2, **dadurch gekennzeichnet, dass** der Modulator (4) ausgewählt ist aus einem Michelson-Interferometer oder einem Fabry-Pérot-Interferometer oder einem Mach-Zehnder-Interferometer oder einem Twyman-Green-Interferometer oder einem Rayleigh-Interferometer oder einem Sagnac-Interferometer oder einem Fizeau-Interferometer oder einem verkippten Fest-Etalon, welches periodisch verkippt werden kann.

4. System nach einem der Ansprüche 1 bis 3, **dadurch gekennzeichnet, dass** der Modulator (4) zumindest ein Interferometer (42) mit zumindest folgenden Teilen aufweist:
Zumindest einen ersten optischen Pfad (421) mit einer ersten optischen Weglänge und
Zumindest einem zweiten optischen Pfad (422) mit einer zweiten optischen Weglänge und
Zumindest einem Strahlteiler (423) mit zumindest einem Eingag und zumindest zwei Ausgängen, wobei
Bei Betrieb der Einrichtung eintreffende elektromagnetische Strahlung auf den Strahlteiler (423) fällt und der Strahlteiler (423) das Licht anteilig auf den ersten (421) und den zweiten (422) optischen Pfad aufteilt, und wobei das Licht der beiden optischen Pfade (421, 422) vor dem Nachweis im photoelektrischen Konverter (5) zur Interferenz gebracht wird, wobei zumindest eine optische Weglänge zeitlich veränderlich ist.

5. Verfahren zur Erkennung von Laserstrahlung (45), bei welchem
elektromagnetische Strahlung (45) an zumindest einer Oberfläche (8) reflektiert oder gestreut wird,
die reflektierte oder gestreute elektromagnetische Strahlung (46) einem Modulator (4) mit einem Eingang und einem Ausgang zugeführt wird, wobei der Modulator zumindest eine Einrichtung zur Erfassung der räumlichen oder zeitlichen Kohärenz aufweist und Laserstrahlung mit einer vorgebbaren Modulationsfrequenz moduliert,
so dass die Intensität der Laserstrahlung mit der Modulationsfrequenz zu- oder abnimmt, und die elektromagnetische Strahlung vom Ausgang des Modulators einem photoelektrischen Wandler (5) zugeführt und dort in ein elektrisches Signal gewandelt wird,
**dadurch gekennzeichnet, dass** Hintergrundstrahlung den Modulator (4) mit konstanter Intensität oder einer vom Modulator unabhängigen Modulationsfrequenz passiert und mit einer Auswerteschaltung (7), welche einen Lock-In-Verstärker und/oder einen Frequenzanalysator und/oder einen Box-Car Integrator und/oder eine Einrichtung zur Durchführung eines Korrelationsverfahrens enthält, der Signalanteil bestimmt wird, welcher durch Laserstrahlung erzeugt wird.

6. Verfahren nach Anspruch 5, **dadurch gekennzeichnet, dass** die Oberfläche (8) Teil eines Fahr- oder Flugzeuges (3) und/oder Teil eines Gebäudes und/oder Teil eines Freigeländes (31) und/oder Teil einer Personenansammlung ist.

## Claims

1. System having a device (1) for detecting laser radiation (45) and having an alarm device (6), which provides an optical, acoustic and/or tactile alarm when laser radiation is detected, or a switchable protective device, wherein the alarm device (6) or the switchable protective device is connected to the device (1) for detecting laser radiation (45) via a data link (61), wherein the device (1) contains at least one light inlet (51), which is designed to allow electromagnetic radiation (45) to enter which has been reflected or scattered on at least one surface (8), and wherein the device (1) contains at least one photoelectric transducer (5), which is designed to convert electromagnetic radiation (46) entering through the light inlet (51) into an electrical signal, wherein
a modulator (4) is arranged in the beam path between the light inlet (51) and the photoelectric transducer (5), which modulator has at least one device for detecting the spatial or temporal coherence and which is designed to modulate laser radiation at a modulation frequency so that the intensity of the laser radiation impinging on the photoelectric transducer increases or decreases with the modulation frequency, wherein background radiation of constant intensity or of a modulation frequency independent of the modulator impinges on the photoelectric transducer, and the device further contains an evaluation circuit (7) by means of which a signal component of the electrical signal that has the modulation frequency can be determined, wherein the evaluation circuit (7) contains a lock-in amplifier and/or a frequency analyzer and/or a box-car integrator and/or a device for carrying out a correlation method.

2. System according to claim 1, **characterized in that** the modulator (4) includes at least one screen (441) by which incoming electromagnetic radiation is at least partially reflectable, the screen (411) being movable relative to the photoelectric transducer (5).

3. System according to any one of claims 1 to 2, **characterized in that** the modulator (4) is selected from a Michelson interferometer or a Fabry-Pérot interferometer or a Mach-Zehnder interferometer or a Twyman-Green interferometer or a Rayleigh interferometer or a Sagnac interferometer or a Fizeau interferometer or a tilted fixed etalon which can be tilted periodically.

4. System according to any one of claims 1 to 3, **characterized in that** the modulator (4) has at least one interferometer (42) including at least the following parts:
at least one first optical path (421) having a first optical path length; and
at least one second optical path (422) having a second optical path length and
at least one beam splitter (423) having at least one input and at least two outputs, wherein, when the device is operated, impinging electromagnetic radiation is incident on the beam splitter (423) and the beam splitter (423) splits the light proportionally between the first (421) and the second (422) optical paths, and wherein the light of the two optical paths (421, 422) is brought to interference in the photoelectric transducer (5) prior to detection, wherein at least one optical path length is time-variable.

5. Method for detecting laser radiation (45), in which
electromagnetic radiation (45) is reflected or scattered on at least one surface (8),
the reflected or scattered electromagnetic radiation (46) is supplied to a modulator (4) having an input and an output, the modulator having at least one device for detecting the spatial or temporal coherence and modulating laser radiation at a specifiable modulation frequency so that the intensity of the laser radiation increases or decreases with the modulation frequency, and the electromagnetic radiation is supplied from the output of the modulator to a photoelectric transducer (5) where it is converted into an electrical signal,
**characterized in that** background radiation passes through the modulator (4) at a constant intensity or at a modulation frequency which is independent of the modulator, and the signal component which is generated by laser radiation is determined by means of an evaluation circuit (7) which contains a lock-in amplifier and/or a frequency analyzer and/or a box-car integrator and/or a device for carrying out a correlation method.

6. Method according to claim 5, **characterized in that** the surface (8) is part of a vehicle or aircraft (3) and/or part of a building and/or part of an open-air area (31) and/or part of a gathering of people.

## Revendications

1. Système comprenant un dispositif (1) de détection d'un rayonnement laser (45) et un dispositif d'alarme (6) qui émet une alarme optique, acoustique et/ou tactile lorsqu'un rayonnement laser est détecté, ou un dispositif de protection commutable, le dispositif d'alarme (6) ou le dispositif de protection commutable étant relié au dispositif (1) de détection d'un rayonnement laser (45) par une liaison de données (61),
dans lequel
le dispositif (1) présente au moins une entrée de lumière (51) conçue pour laisser entrer un rayonnement électromagnétique (45) qui a été réfléchi ou diffusé sur au moins une surface (8), et
le dispositif (1) comprend au moins un convertisseur photoélectrique (5) conçu pour convertir le rayonnement électromagnétique (46) arrivant par l'entrée de lumière (51) en un signal électrique,
un modulateur (4) est disposé dans le chemin de rayonnement entre l'entrée de lumière (51) et le convertisseur photoélectrique (5), lequel présente au moins un dispositif de détection de la cohérence spatiale ou temporelle et est conçu pour moduler le rayonnement laser avec une fréquence de modulation, de sorte que l'intensité du rayonnement laser arrivant sur le convertisseur photoélectrique augmente ou diminue avec la fréquence de modulation,
un rayonnement de fond d'intensité constante ou d'une fréquence de modulation indépendante du modulateur arrive sur le convertisseur photoélectrique, et
le dispositif comprend en outre un circuit d'évaluation (7) permettant de déterminer une partie du signal électrique qui présente la fréquence de modulation, le circuit d'évaluation comprenant un amplificateur à détection synchrone et/ou un analyseur de fréquence et/ou un intégrateur à échantillonnage (dit box-car) et/ou un dispositif permettant de mettre en oeuvre un procédé de corrélation.

2. Système selon la revendication 1,
**caractérisé en ce que** le modulateur (4) présente au moins un écran (441) sur lequel le rayonnement électromagnétique arrivant peut être réfléchi au moins partiellement, l'écran (411) pouvant être déplacé par rapport au convertisseur photoélectrique (5).

3. Système selon l'une des revendications 1 à 2,
**caractérisé en ce que** le modulateur (4) est choisi parmi un interféromètre de Michelson ou un interféromètre de Fabry-Pérot ou un interféromètre de Mach-Zehnder ou un interféromètre de Twyman-Green ou un interféromètre de Rayleigh ou un interféromètre de Sagnac ou un interféromètre de Fizeau ou un étalon fixe incliné qui peut être incliné périodiquement.

4. Système selon l'une des revendications 1 à 3,
**caractérisé en ce que** le modulateur (4) comprend au moins un interféromètre (42) comportant au moins les éléments suivants :
au moins un premier chemin optique (421) ayant une première longueur de chemin optique, et
au moins un deuxième chemin optique (422) ayant une deuxième longueur de chemin optique, et
au moins un diviseur de faisceau (423) présentant au moins une entrée et au moins deux sorties,
dans lequel
un rayonnement électromagnétique arrivant lors du fonctionnement du dispositif tombe sur le diviseur de faisceau (423), et le diviseur de faisceau (423) répartit la lumière proportionnellement entre les premier (421) et deuxième (422) chemins optiques, et la lumière des deux chemins optiques (421, 422) est amenée à interférer dans le convertisseur photoélectrique (5) avant la détection, au moins une longueur de chemin optique étant variable dans le temps.

5. Procédé de détection d'un rayonnement laser (45), dans lequel
le rayonnement électromagnétique (45) est réfléchi ou diffusé sur au moins une surface (8),
le rayonnement électromagnétique (46) réfléchi ou diffusé est amené à un modulateur (4) ayant une entrée et une sortie, le modulateur présentant au moins un dispositif de détection de la cohérence spatiale ou temporelle et modulant le rayonnement laser avec une fréquence de modulation prédéfinissable,
de sorte que l'intensité du rayonnement laser augmente ou diminue avec la fréquence de modulation, et le rayonnement électromagnétique est amené de la sortie du modulateur à un convertisseur photoélectrique (5) où il est converti en un signal électrique,
**caractérisé en ce que** le rayonnement de fond passe à travers le modulateur (4) avec une intensité constante ou une fréquence de modulation indépendante du modulateur, et
la partie du signal qui est générée par le rayonnement laser est déterminée à l'aide d'un circuit d'évaluation (7) qui comprend un amplificateur à détection synchrone et/ou un analyseur de fréquence et/ou un intégrateur à échantillonnage (dit box-car) et/ou un dispositif permettant de mettre en oeuvre un procédé de corrélation.

6. Procédé selon la revendication 5,
**caractérisé en ce que** la surface (8) fait partie d'un véhicule ou d'un avion (3) et/ou d'un bâtiment et/ou d'un terrain en plein air (31) et/ou d'un rassemblement de personnes.
